Europäisches Patentamt

(19) European Patent Office

Office européen des brevets

(11) Publication number : **0 220 883 B1**

# (12) EUROPEAN PATENT SPECIFICATION

(45) Date of publication of patent specification :
13.03.91 Bulletin 91/11

(51) Int. Cl.⁵ : **B60S 1/40**

(21) Application number : 86308015.6

(22) Date of filing : 16.10.86

(54) Windscreen and like surface wiper device and connector device for use therein.

(30) Priority : 17.10.85 GB 8525590

(43) Date of publication of application :
06.05.87 Bulletin 87/19

(45) Publication of the grant of the patent :
13.03.91 Bulletin 91/11

(84) Designated Contracting States :
BE DE FR IT

(56) References cited :
DE-A- 2 319 952
DE-A- 2 715 148
FR-A- 2 297 754
FR-A- 2 403 247

(56) References cited :
FR-A- 2 411 735
FR-A- 2 411 736
FR-A- 2 421 765
FR-A- 2 486 002
US-A- 4 177 537

(73) Proprietor : TRICO-FOLBERTH LIMITED
Great West Road
Brentford Middlesex TW8 9HP (GB)

(72) Inventor : Pethers, Peter Cecil
Villa Rosa Lovel Road
Winkfield Berkshire (GB)

(74) Representative : Pedder, James Cuthbert
J.C. Pedder & Co. 38 Norbury Cross
Norbury London SW16 4JQ (GB)

EP 0 220 883 B1

Note : Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to a windscreen and like surface wiper device and to a connector device for use therein of the type known, for example, from US-A-4, 177, 537 and defined in the preamble of claim 1.

The term "windscreen and like surface" is intended to include not only windscreens as such but also any other surface which can be wiped using a windscreen type wiper. Thus it includes rear screens of vehicles, mirrors and headlight glasses.

The present invention relates more particularly to the type of wiper device comprising an arm and a blade pivotally connected together, the arm usually being oscillated about its end away from the blade so as to wipe an arc on a windscreen or like surface. In many such wipers, the blade comprises an elongate main yoke of inverted channel cross section having two sides, preferably parallel, and a connecting web between them, a pivot pin extending transversely between the sides of the main yoke, the main yoke carrying secondary yokes or levers which in turn carry a blade rubber. The arm includes a termination having an aperture, projection or recess and a connector is provided for connecting arm and blade together. The connector comprises a body having a bearing towards one end for engaging the pivot pin, and includes guide means and latching means for respectively locating and securing the termination of the arm so that the connector can pivot with the arm, the latching means including a resiliently flexible tongue having a free end with operating means, and having a latch for snapping into engagement with the aperture, projection or recess in the termination of the arm during assembly.

The problem however exists that, with a number of these known connectors, it is possible for the connector to be reversed and therefore be upside down by pivoting the connector through 180° so that, while the arm is apparently attached to the blade, no latching takes place and the blade can become accidentally detached from the arm. Also, with the use of the so called "lock back" arms, i. e. those arms which can be raised off the windscreen into a stable position allowing the windscreen to be washed, because of the large pivotal movement which is possible between the arm and the blade, when returning the wiper to the windscreen, it is possible for the blade to hit the windscreen end on or upside down, thus possibly scratching the windscreen or damaging the blade.

The present invention seeks to reduce or obviate some or all of the above disadvantages.

According to a first aspect of the invention, there is provided a connector device for connecting the blade of a windscreen or like surface wiper to the arm thereof, comprising a connector including a body having guide and locating means for receiving and holding the end termination of the arm, bearing means towards one end for engagement with a pivot pin in an opening of the main yoke of the blade and stop means engageable with the edge of the yoke opening as the connector pivots to an inclined position inclined at an angle thereto on the side away from the blade rubber, characterised in that the said stop means comprise a rib formed on that edge of one longitudinal side of the connector body which is intended to be away from the blade rubber, the rib projecting at right angles to the said side and being such as to be engageable with the edge of the yoke opening in such away that the connector is pivotable only between a first position at least generally parallel to the yoke and a second position being the said inclined position.

According to a second aspect of the invention, there is provided a windscreen or like surface wiper device comprising a blade having a yoke of inverted channel cross-section with two sides and a connecting web and a pivot pin extending transversely between the sides of the yoke at an opening in the web; an arm having a termination with an aperture, projection or recess ; and a connector as above referred to.

In this way, the connector of the windscreen wiper can prevent both the possibility of the arm being attached to the connector upside down with the consequent possibility of the arm becoming accidentally detached therefrom and the possibility of excess pivotal freedom of the blade relative to the arm so that, even with lock back arms, the blade cannot take up a position in which it could damage the windscreen or like surface.

The invention will now be described in greater detail, by way of example, with reference to the drawings, in which :

Figure 1 is a diagrammatic side view of part of the main yoke of a windscreen wiper blade and part of a windscreen wiper arm, the arm and blade being connected together by means of a connector device in accordance with the invention with the connector in a first terminal position ;

Figure 2 is a diagrammatic view similar to figure 1 but showing the connector in a second terminal position ;

Figure 3 is a perspective view of the connector shown in figures 1 and 2 from above ;

Figure 4 is a perspective view of the connector shown in figures 1 and 2 from below, and

Figure 5 is a perspective view of a different form of connector in accordance with the invention.

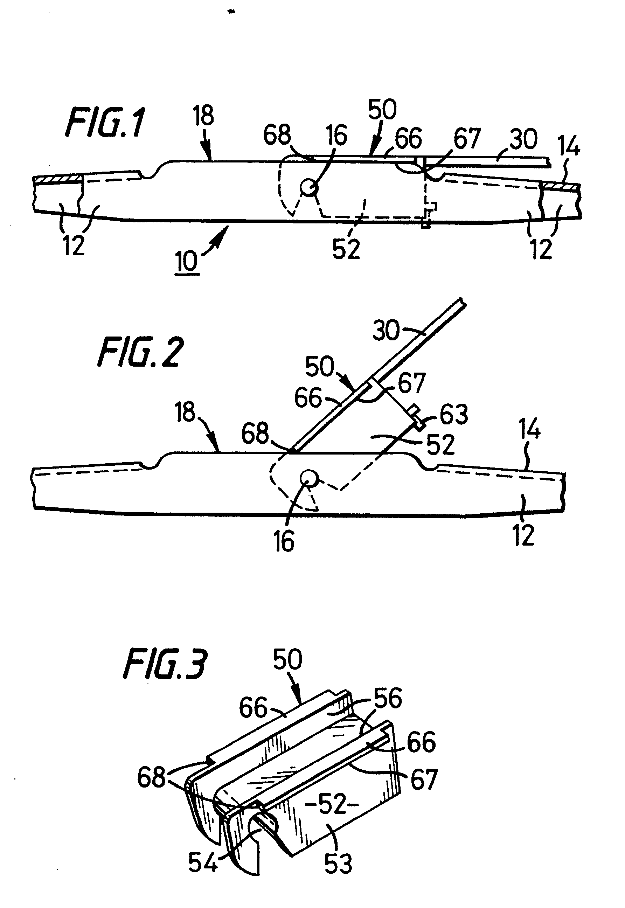

Referring firstly to figures 1 and 2, the construction of wiper blades and arms, to the extent necessary to understand the invention, will now be described. The blade 10, of wich part is shown in figures 1 and 2, is of known type having an elongate yoke of inverted channel cross-section with parallel sides 12 and a connecting web 14. A pivot pin 16 extends transversely between the sides 12 of the yoke at an opening 18 in the web 14 of the yoke. The pivot pin thereby effects nominal division of the opening 18 into two longitudinally extending portions which may be of equal or unequal length.

The arm 30 is also of known type and has a hook termination (not shown). The hook termination has a semi-circular bend merging with parallel main and limb portions respectively. An aperture is formed in the arm, extending through the limb portion of the termination for latching purposes. The hook termination may be inclined at a slight angle to the remainder of the arm 30 if required.

The connector 50 shown in figures 1 to 4 includes a body 52 having two sides 53 and a bearing 54 towards one end of the body 52 for engaging the pivot pin 16. It also includes guide means 56 in the form of a groove extending along top and bottom of the connector and around one end for locating the termination of the arm 30. Latching means 58 are provided for securing the termination of the arm 30. The guide means 56 and latching means 58 ensure that the connector is rigid with and thus pivotable with the arm 30.

The latching means includes a resiliently flexible tongue 60 located in the base of the groove 56 and having a free end 62 extending sligthly beyond the body 52 of the connector 50. It has a latch in the form of a projecting detent 64 for snapping into engagement with the aperture (not shown) extending through the limb portion of the hook termination of the arm 30. The free end 62 of the tongue 60 has a projection 63 by means of which the tongue 60 may be manipulated so as to remove the detent from the aperture in the arm 30 and release the arm.

The connector as described so far is in fact identical to an existing connector whose salient features as regards formation and function are well known, with the result that it is not necessary to provide a further description of its operation.

However, the present connector differs from the known connector by the provision of stop means in the form of a rib 66 which extends part way along the top edge of the sides 53 of the connector body 52. This rib 66 prevents over pivoting of the connector, and thus also of the arm 30 relative to the blade 10 and also prevents the connector from being reversed as will be described.

Figures 1 and 2 show the terminal positions of the connector 50 relative to the blade yoke 10. Figure 1 shows a first terminal position in wich the longitudinal axis of the connector 50 lies parallel to the longitudinal axis of the blade 10. It will be seen that, in this position, a stop is provided by the lower surface 67 of the rib 60 wich engages the edge of the opening 18 in the yoke 10. In practice, it may not always be possible to achieve this position as the arm, when assembled to the blade, may foul the blade at this point. Figure 2 shows the other terminal position of the connector 50. As can be seen, in this position, the end 68 of the rib 66 forms a stop. The arm 30 and its connector 50 can pivot freely between the two terminal positions. This allows for both normal working of the arm 30 and blade 10 as well as providing sufficient pivoting to enable mounting and demounting of the arm 30 on the connector 50. Normal working of the wiper requires a pivotal movement of the order of 10° and mounting and demounting requires a pivotal movement of the order of 30°, preferably of the order of 15°, although it is possible to use larger angles in some cases it required.

In order to achieve the appropriate pivoting of the connector and blade, the positioning of the end 68 or the rib is very important. To this end, it is located above and somewhat to one side of the bearing axis of the connector 50 when the connector is viewed in the position shown in figure 1. Thus, in this position, the end lies spaced from a line at right angles to the longitudinal axis of the connector and passing through the axis of the connnector bearing 54. The exact positioning of the end 68 of the rib 66 will depend on the desired angle of inclination to be achieved.

Because the pivoting of the connector 50 relative to the blade 10 is limited, it is not possible to rotate the connector 50 trough 180° and thus it is not possible to attach the arm 30 to the connector 50 in reverse. Thus it is ensured that the arm 30 will always be properly latched to the connector 50 and cannot become accidentally detached. In addition, in lock back situations, the blade 10 cannot end up end on or upside down to the windscreen and thus cannot cause damage to the windscreen or to the wiper blade.

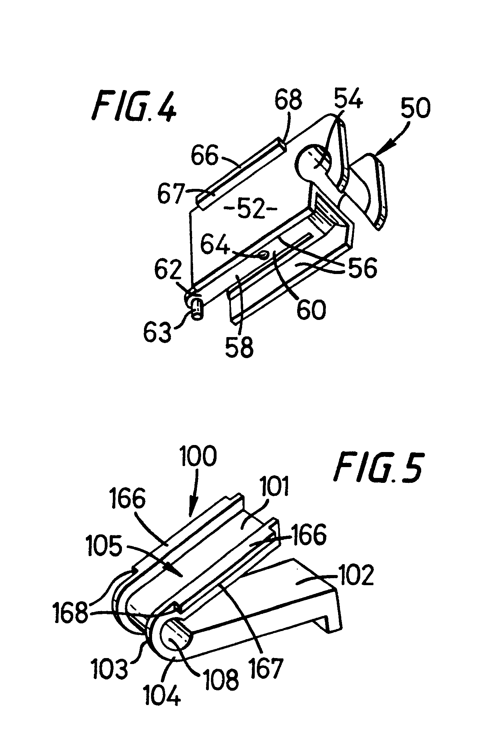

Figure 5 shows a different form of connector 100 which is of the "hairpin" type. The connector here, which is also basically known, comprises a connector body 104 having upper and lower legs 101 and 102 respectively, connected together by a resilient curved connection portion 103. The legs of the connector are grooved as shown an 105 to provide for guiding of a hook termination of an arm. The lower leg 102 is provided with a latching detent (not shown) for latching the arm 30. The two legs themselves are relatively rigid but are resiliently movable towards and away from each other about the curved portion 103. The inner part of the curved portion 103 is in the form of a bearing 108 engageable with the pivot pin 16 of the yoke 10.

The connector 100 is provided with two ribs 166 along the upper edge of the upper leg 101 and these ribs 166 function in the same way as the ribs 66 in the first embodiment. Thus they are provided with stop surfaces 167 and 168.

It will be appreciated that various modifications may be made to the above described embodiments without departing from the scope of the invention. For example, where a rib has been shown on both sides of the connector, and while it is believed to be the most desirable situation, nevertheless one of the ribs 66 could be dispensed with. Instead of ribs, the stop means could take the form of two stop projections, one being situated at the position of the stop end 68 or 168, and the other being situated somewhere along the line of the rib. Alternatively, where it is not required to have such stringent angles, a single stop could be positioned part way along the line of the rib.

While the invention has been described in relation to one form of hook termination, the invention could equally well be used with other hook terminations, or indeed any other suitable form of termination where it is desired to limit the pivotal movement between a connector situated within the opening in the yoke and the yoke itself. Such other terminations include the straight or so called "bayonet" type.

While the invention has been described for wipers for windscreens, it will of course be appreciated that it is equally applicable to other surfaces, for example rear screens, mirrors or headlight glasses.

From the foregoing it will be seen that the described embodiments and their described modifications provide a connector and/or windscreen wiper with which it is possible to limit the pivoting between the connector and the blade and, in particular, to prevent rotation of the connector through approximately 180° relative to the blade and thus prevent assembly of the connector on the arm in the reverse direction.

## Claims

1. A connector device for connecting the blade (10) of a windscreen or like surface wiper to the arm (30) thereof, comprising a connector (50, 100) including a body (52, 104) having guide and locating means (56, 58, 105) for receiving and holding the end termination of the arm (30), bearing means (54, 108) towards one end for engagement with a pivot pin (16) in an opening (18) of the main yoke of the blade (10) and stop means (66-68, 166-168) engageable with the edge of the yoke opening (18) as the connector pivots to an inclined position inclined at an angle thereto on the side away from the blade rubber characterised in that the stop means (66-68, 166-168) comprise a rib (66, 166) formed on that edge of one longitudinal sides of the connector body (52, 104) which is intended to be away from the blade rubber, the rib (66, 166) projecting at right angles to the said side and being such as to be engageable with the edge of the yoke opening (18) in such a way that the connector is pivotable only between a first position at least generally parallel to the yoke (10) and a second position being the said inclined position.

2. A windscreen or like surface wiper device comprising a blade (10) having a yoke of inverted channel cross-section with two sides (12) and a connecting web (14) and a pivot pin (16) extending transversely between the sides (14) of the yoke at an opening (18) in the web (14) ; an arm (30) having a termination with an aperture, projection or recess ; and a connector (50, 100) according to claim 1.

3. A device as claimed in claim 1 or 2, characterised in that the rib (66, 166) is provided on both longitudinal sides of the body (52, 104), at corresponding positions thereon and projecting in opposite directions.

4. A device as claimed in claim 3, characterised in that the or each rib (66, 166) extends longitudinally from a position longitudinally spaced from the axis of the bearing means (54, 108) and in a direction away from the bearing means (54, 108).

5. A device as claimed in claim 4, characterised in that the side (6, 167) of the rib or ribs (66, 166) facing along the side of the connector body (52, 104) forms a stop for the said first position and the end (68, 168) of the rib or ribs (66, 166) adjacent to the bearing means (54, 104) forms a stop for the said second position.

6. A device as claimed in any one of claims 1 to 5, characterised in that the guiding means on the connector body (52, 104) comprises a groove (56, 105) extending around the top, bottom and one end face thereof so that the base of the groove (56, 105) follows a "U" shape and is adapted to receive therein a hook termination of an arm (30).

7. A device as claimed in claim 6, characterised in that the locating means comprises a resilient tongue (58), located in the base of the groove (56) and having a projection recess or aperture (64) for cooperation with the aperture recess or projection on the arm termination.

8. A device as claimed in claim 6, characterised in that the connector body (104) comprises an upper leg (101) and a lower leg (102) connected together resiliently at said one end face.

9. A device as claimed in claim 8, characterised in that the lower leg (102) has, in the base of its groove (105), a projection recess or aperture for cooperation with the aperture recess or projection on the arm termination.

## Ansprüche

1. Verbindungsvorrichtung zur Verbindung des Blattes (10) eines Scheibenwischers oder einer ähnlichen Wischvorrichtung für eine Oberfläche an dessen Arm (30), der ein Verbindungsglied (50, 100) umfaßt, das einen Körper (52, 104) einschließt, der eine Führungs- und Anordnungseinrichtung (56, 58, 105) zur Aufnahme und zum Halten des abschließenden Endes des Armes (30), eine Stützeinrichtung (54, 108) in Richtung eines Endes zum Eingriff in den Drehstift (16) in einer Öffnung (18) des Hauptarmes bzw. -bügels des Blattes (10) und eine Stopeinrichtung (66-68, 166-168) aufweist, der in die Kante der Öffnung (18) des Armes bzw. Bügels eingreifen kann, wenn sich das Verbindungsglied in eine geneigte Position dreht, die auf der vom Gummiblatt weggewandten Seite in einem Winkel dazu geneigt ist, dadurch gekennzeichnet, daß die Stopeinrichtung (66-68, 166-168) eine Rippe (66, 166) aufweist, die auf der Kante einer Längsseite des Körpers (52, 104) des Verbindungsgliedes ausgebildet ist, die vom Gummiblatt entfernt sein soll, wobei die Rippe (66, 166) in rechten Winkeln zu dieser Seite vorsteht und derart ist, daß sie mit der Kante der Öffnung (18) des Armes bzw. Bügels in der Weise in Eingriff stehen kann, daß das Verbindungsglied nur zwischen der ersten Position, die zumindest im allgemeinen zum Arm bzw. Bügel (10) parallel ist, und einer zweiten Position schwenkbar ist, die die geneigte Position ist.

2. Schweibenwischer oder ähnliche Wischvorrichtung für eine Oberfläche, die ein Blatt (10), das einen Arm bzw. Bügel mit umgekehrtem Kanalquerschnitt mit 2 Seiten (12) und einer Verbindungsfläche (14) und einem Drehstift (16) aufweist, der sich an der Öffnung (18) in der Fläche (14) quer zwischen den Seiten (14) des Armes bzw. Bügels erstreckt ; einen Arm (30), der einen Abschluß mit einer Öffnung, einem Vorsprung oder einer Vertiefung aufweist ; und ein Verbindungsglied (50, 100) nach Anspruch 1 umfaßt.

3. Vorrichtung nach Anspruch 1 oder 2, dadurch gekennzeichnet, daß die Rippe (66, 166) an entsprechenden Positionen auf beiden Längsseiten des Körpers (52, 104) vorgesehen ist, und diese in entgegengesetzten Richtungen vorstehen.

4. Vorrichtung nach Anspruch 3, dadurch gekennzeichnet, daß sich die oder jede Rippe (66, 166) längs von einer Position, die in Längsrichtung von der Achse der Stützeinrichtung (54, 108) räumlich getrennt ist, und in einer Richtung erstreckt, die von der Stützeinrichtung (54, 108) weggerichtet ist.

5. Vorrichtung nach Anspruch 4, dadurch gekennzeichnet, daß die Seite (67, 167) der Rippe oder der Rippen (66, 166), die entlang der Seite des Körpers (52, 104) des Verbindungsgliedes verläuft, einen Halt für die erste Position bildet, und das Ende (68, 168) der Rippe oder Rippen (66, 166) neben der Stützeinrichtung (54, 108) einen Halt für die zweite Position bildet.

6. Vorrichtung nach einem der Ansprüche 1 bis 5, dadurch gekennzeichnet, daß die Fürungseinrichtung auf dem Körper (52, 104) des Verbindungsgliedes eine Nut (56, 105) umfaßt, die sich um die Oberseite, Unterseite und eine Seitenfläche erstreckt, so daß die Grundfläche der Nut (56, 105) einer "U"-Form folgt und so angepaßt ist, daß das Hakenende des Armes (30) darin aufgenommen wird.

7. Vorrichtung nach Anspruch 6, dadurch gekennzeichnet, daß die Anordnungseinrichtung eine elastische Zunge (58) umfaßt, die in der Grundfläche der Nut (56) angeordnet ist, und eine Vorsprungsvertiefung oder Öffnung (64) aufweist, um mit der Öffnungsvertiefung oder dem Vorsprung auf dem Ende des Armes in Wechselwirkung zu treten.

8. Vorrichtung nach Anspruch 6, dadurch gekennzeichnet, daß der Körper (104) des Verbindungsgliedes einen oberen Schenkel (101) und einen unteren Schenkel (102) umfaßt, die an der einen Seitenfläche elastisch miteinander verbunden sind.

9. Vorrichtung nach Anspruch 8, dadurch gekennzeichnet, daß der untere Schenkel (102) in der Unterseite seiner Nut (105) eine Vorsprungsvertiefung oder Öffnung zur Wechselwirkung mit der Öffnungsvertiefung oder dem Vorsprung auf dem Ende des Armes aufweist.

## Revendications

1. Dispositif de raccord destiné à relier le balai (10) d'un essuie-glace pour pare-brise ou surfaces similaires au bras (30) de celui-ci, constitué par une pièce de raccord (50, 100) comprenant un corps (52, 104) muni de moyens de guidage et de positionnement (56, 58, 105) destinés à recevoir et à maintenir la terminaison d'extrémité du bras (30), de moyens de support (54, 108) dirigés vers une extrémité pour la coopération avec un axe pivotant (16) dans une ouverture (18) de l'étrier principal du balai (10) et des butées (66-68, 166-168) pouvant coopérer avec le bord de l'ouverture d'étrier (18) lorsque la pièce de raccord pivote sur une position inclinée selon un certain angle par rapport à celle-ci sur le côté éloigné de la lame en caoutchouc du balai, caractérisé en ce que les butées (66-68, 166-168) comprennent une nervure (66, 166) formée sur le bord d'un côté longitudinal du corps de la pièce de raccord (52, 104) destinée à être éloignée de la lame en caoutchouc, la nervure (66, 166) faisant saillie à angles droits par rapport au côté étant agencée pour pouvoir coopérer avec le bord de l'ouverture d'étrier (18) de telle manière que la pièce de raccord ne peut pivoter qu'entre une première position au moins de façon générale parallèle à l'étrier (10) et une seconde position étant la position inclinée.

2. Essuie-glace pour pare-brise ou surfaces similaires comprenant un balai ou lame (10) muni d'un étrier de section transversale en forme de profilé en U inversé avec deux côtés (12) et une âme de liaison (14), et un axe pivotant (16) s'étendant transversalement entre les côtés (14) de l'étrier sur une ouverture (18) en lame (14) ; un bras (30) comportant une terminaison avec une ouverture, une saillie ou un évidement ; et une pièce de raccord (50, 100) selon la revendication 1.

3. Dispositif selon la revendication 1 ou 2, caractérisé en ce que la nervure (66, 166) est prévue sur les deux côtés longitudinaux du corps (52, 104), à des positions correspondantes et faisant saillie dans des directions opposées.

4. Dispositif selon la revendication 3, caractérisé en ce que chaque nervure (66, 166) s'étend longitudinalement à partir d'une position espacée longitudinalement de l'axe du moyen de support (54, 108) et dans une direction éloignée du moyen de support (54, 108).

5. Dispositif selon la revendication 4, caractérisé en ce que le côté (67, 167) de la nervure ou des nervures (66, 166) faisant face le long du côté du corps de la pièce de raccord (52, 104) forme une butée pour la première position et l'extrémité (68, 168) de la nervure ou des nervures (66, 166) contiguës au moyen de support (54, 108) forment une butée pour la seconde position.

6. Dispositif selon l'une quelconque des revendications 1 à 5, caractérisé en ce que les moyens de guidage sur le corps de la pièce de raccord (52, 104) comprennent une nervure (56, 105) s'étendant autour du dessus ou du dessous et d'une face d'extrémité de sorte que la base de la rainure (56, 105) suit une configuration en "U" apte à recevoir une terminaison en crochet du bras (30).

7. Dispositif selon la revendication 6, caractérisé en ce que le moyen de positionnement comprend une languette élastique (58) située sur la base de la rainure (56) et présentant une saillie, évidement ou ouverture (64) pour la coopération avec l'ouverture, l'évidement ou la saillie sur la terminaison du bras.

8. Dispositif selon la revendication 6, caractérisé en ce que le corps de la pièce de raccord (104) comprend une jambe supérieure (101) et une jambe inférieure (102) raccordée ensemble de façon élastique sur une face d'extrémité.

9. Dispositif selon la revendication 8, caractérisé en ce que la jambe inférieure (102) présente sur la base de sa rainure (105) une saillie, un évidement ou une ouverture pour la coopération avec l'ouverture, l'évidement ou la saillie sur la terminaison du bras.

FIG.1

FIG.2

FIG.3

## FIG.4

## FIG.5